# EUROPÄISCHE PATENTANMELDUNG

(11) **EP 0 905 944 A1**
(43) Veröffentlichungstag der Anmeldung: **31.03.1999**
(21) Anmeldenummer: 98115518.7
(22) Anmeldetag: 18.08.1998
(51) Int. Cl.: H04L 12/58, H04M 11/08

(54) **Verfahren und Postmelde-Einheit zum Behandeln von nicht abgerufener, elektronischer Post**

(30) Priorität: 30.09.1997 DE 19743363
(71) Anmelder: SIEMENS AKTIENGESELLSCHAFT, 80333 München (DE)
(72) Erfinder: Egger, Walter, 87463 Dietmannsried (DE)

(57) **Zusammenfassung**

Bei zumindest einer im Kommunikationsnetz (KN) vorliegenden und von einem betroffenen Kommunikationsendgerät (KE(PC)) nicht abgerufenen elektronischen Post (em) wird im Kommunikationsnetz (KN) eine das Vorliegen einer nicht abgerufenen elektronischen Post (em) anzeigende Nachricht (n) gebildet und an eine im Bereich des betroffenen Kommunikationsendgerätes KE(PC) angeordnete, ständig für den Empfang von Nachrichten (n) befähigte Postmelde-Einheit (PME) übermittelt. Das Vorliegen einer nicht zustellbaren, elektronischen Post (em) für das jeweilige Kommunikationsendgerät (KE(PC)) wird an der Postmelde-Einheit (PME) optisch und/oder akustisch angezeigt.

## Beschreibung

Der Informationsaustausch zwischen Teilnehmern bzw. Kommunikationsendgeräten in derzeitigen Kommunikationsnetzen findet in zunehmenden Maße elektronisch statt. Eine weit verbreitete elektronische Informationsübermittlung stellt die elektronische Post dar, die in der Fachwelt mit E-Mail (Electronic-Mail) bezeichnet wird. Die elektronische Post bzw. E-Mail wird insbesondere in Internet- bzw. Multimedia-Kommunikationsendgeräten verwendet, wobei die Kommunikationsendgeräte üblicherweise durch Personal Computer realisiert sind. Hierbei wird die zu übermittelnde Information im Personalcomputer gebildet bzw. eine gespeicherte Information mit einer Zieladresse versehen und über beispielsweise das Fernsprech- oder ISDN-Kommunikationsnetz an einen lokalen E-Mail-Server übermittelt. Von diesem wird die zu übermittelnde Information, d.h. die elektronische Post an den dem Ziel-Kommunikationsendgerät nächstliegenden bzw. lokalen E-Mail-Server über ggfs. unterschiedliche Kommunikationsnetze übermittelt und dort gespeichert, wobei das global vorhandene Fernsprechnetz das bevorzugte Kommunikationsnetz darstellt. Vom lokalen E-Mail-Server wird anschließend die gespeicherte elektronische Post vom Ziel-Kommunikationsendgerät abgerufen, d.h. eine Verbindung von diesem an den lokalen E-Mail-Server aufgebaut und die jeweilige elektronische Post an das Ziel-Kommunikationsendgerät übertragen.

Zur Übertragung der Informationen bzw. der elektronischen Post zu und von den Kommunikationsendgeräten sind in diesen oder zwischen diesen und den Kommunikationsnetzanschlüssen Übertragungseinrichtungen vorgesehen. Für das Fernsprech-Kommuni-kationsnetz kommen als Übertragungseinrichtungen die bekannten Modems zum Einsatz, wobei diese in den Kommunikationsendgeräten integriert sind oder extern als eigenständige Übertragungseinrichtung - stand alone modems - eingesetzt werden. Für ISDN-Kommunikationsendgeräte sind die integrierten Übertragungseinrichtungen gemäß den standardisierten Echokompensations- und Zeitgetrenntlage-Übertragungsverfahren vorgesehen.

Befindet sich das Kommunikationsendgerät in stromlosem Zustand, d.h. das Kommunikationsendgerät ist abgeschaltet, so kann keine Verbindung zwischen dem lokalen E-Mail-Server und dem Kommunikationsendgerät für die Übermittlung einer elektronischen Post aufgebaut werden. Das Vorhandensein einer im lokalen E-Mail-Server gespeicherten elektronischen Post kann dem Kommunikationsendgerät erst wieder nach einer Aktivierung des betroffenen Kommunikationsendgerätes, d.h. nach Einschalten der Stromversorgung, und nach einer E-Mail-Aktivierung angezeigt werden. Diese Verzögerung bedeutet eine erhebliche Einschränkung der Attraktivität der elektronischen Post, da zu übermittelnde Informationen bei einer verzögerten Übermittlung an Aktualität verlieren können, d.h. nicht mehr relevant sind - z.B. Terminübermittlungen.

Die der Erfindung zugrundeliegende Aufgabe besteht darin, die elektronische Post mit geringsten Verzögerungen zu übermitteln. Die Aufgabe wird durch die Merkmale des Patentanspruchs 1 gelöst.

Ein wesentlicher Aspekt des erfindungsgemäßen Verfahrens ist darin zu sehen, daß bei zumindest einer im Kommunikationsnetz nicht abgerufenen elektronischen Post im Kommunikationsnetz eine das Vorliegen einer nicht abgerufenen elektronischen Post anzeigende Nachricht gebildet und an eine im Bereich des betroffenen Kommunikationsendgerätes angeordnete, mit dem Kommunikationsnetz verbundene sowie ständig für den Empfang von Nachrichten befähigte Postmelde-Einheit übermittelt wird. An der Postmelde-Einheit wird das Vorliegen einer nicht abgerufenen elektronischen Post für das jeweilige Kommunikationsendgerät optisch und/oder akustisch angezeigt. Durch das erfindungsgemäße Verfahren wird die Verzögerungszeit für die Zustellung einer aktuell nicht abgerufenen elektronischen Post erheblich verkürzt, da dem Teilnehmer auch bei nicht aktivem Kommunikationsendgerät ein optischer und/oder akustischer Hinweis für das Vorliegen einer nicht abgerufenen elektronischen Post gegeben wird. Der Teilnehmer kann daraufhin sein Kommunikationsendgerät bzw. seinen Personal Computer aktivieren, d. h. dessen Stromversorgung einschalten und die in dem lokalen Post-Server gespeicherte elektronische Post abrufen.

Für die Übermittlung der Nachricht wird vorteilhaft eine Wählverbindung vom Kommunikationsnetz zur Postmelde-Einheit aufgebaut und wieder abgebaut - Anspruch 2. Der Aufbau einer Wählverbindung zur Postmelde-Einheit stellt für den Post-Server und das Kommunikationsnetz die zeitlich geringste Belastung dar.

In der Nachricht an die Post-Meldeeinheit kann vorteilhaft der Name und/oder die elektronische Postadresse des Absenders der elektronischen Post angegeben werden - Anspruch 3. Dies ist insbesondere dann von Vorteil, wenn in der Postmelde-Einheit eine komfortable alphanumerische Anzeige implementiert ist, in der der Name bzw. die elektronische Postadresse optisch dem Teilnehmer angezeigt werden kann.

Sind mehrere Teilnehmer einem Kommunikationsendgerät bzw. einem Personal Computer zugeordnet, so kann in der Nachricht auch der Name des Empfängers bzw. des Teilnehmers angegeben werden - Anspruch 4. Hierzu ist eine Auswertung der elektronischen Post im Kommunikationsnetz, d.h. im lokalen Post-Server des Absenders oder des Empfängers, wie auch an die elektronische Post angehängte Dateien, vorteilhaft Anzahl und jeweilige Größe, erforderlich, wobei in der elektronischen Post in einem speziellen hierfür vorgesehenen Bereich der oder die Empfänger der elektronischen Post anzugeben sind.

Gemäß einer vorteilhaften Weiterbildung des erfindungsgemäßen Verfahrens werden die in der Nachricht angegebenen Postadressen des Absenders sowie der Name des Empfängers in der Postmelde-Einheit gespeichert und können von dem jeweiligen Kommunikationsendgerät bzw. Personal Computer gelesen und visualisiert werden, sofern das Kommunikationsendgerät mit der Postmelde-Einheit über eine geeignete Verbindung - beispielsweise eine V.24-Schnittstellen-Verbindung - verbunden ist - Anspruch 5. Durch diese Maßnahme kann bei einer allgemeinen Anzeige - beispielsweise eine LCD-Anzeige - über das Vorliegen einer nicht zustellbaren, elektronischen Post vorab die Postadresse des Absenders und der Name des Empfängers festgestellt werden, ohne daß eine Verbindung zum Post-Server aufgebaut werden muß. Nach der Visualisierung der Informationen kann über die Aktualität der nicht zustellbaren, elektronischen Post durch den jeweiligen Teilnehmer entschieden werden, d.h. die nicht zustellbare, elektronische Post abfragen oder sofort löschen.

Gemäß einer vorteilhaften Weiterbildung des erfindungsgemäßen Verfahrens wird bei einer gebührenpflichtigen Nachricht die Übernahme der Gebühren durch den Empfänger oder den Absender einer elektronischen Post dem Kommunikationsnetz durch den Empfänger oder den Absender mitgeteilt - Anspruch 6. Üblicherweise wird der die elektronische Post empfangende Teilnehmer die Gebühren für die Zustellung einer Nachricht für das Vorliegen einer nicht abgerufenen, elektronischen Post übernehmen.

Die Nachricht ist bei einer einfachen Realisierung des Verfahrens für analoge Fernsprech-Kommunikationsnetze durch einen Meldeton mit einem vorgegebenen Frequenzbereich repräsentiert - Anspruch 8. Dieser spezielle Meldeton kann im E-Mail-Server einfach erzeugt und über die aufgebaute Verbindung an die Postmelde-Einheit übermittelt werden. In dieser wird der Meldeton durch eine einfach zu realisierende Empfangseinheit - beispielsweise ein analoger frequenzselektiver Tonempfänger - erkannt und anschließend optisch und/oder akustisch angezeigt.

Für einen gezielten Verbindungsaufbau zur jeweiligen Postmelde-Einheit ist beim analogen Fernsprech-Kommunikationsnetz vorteilhaft ein Modemton mit einem vorgegebenen Frequenzbereich und beim ISDN-Kommunikationsnetz eine hierfür definierte ISDN-Rufnummer vorgesehen - Anspruch 9. Der Modemton kann hinsichtlich Pegel und Frequenz entsprechend der üblich verwendeten Modemsteuerung gebildet oder auch unterschiedliche Pegel und Frequenz aufweisen. Bei der Postmelde-Einheit ist für den gezielten Verbindungsaufbau mit einem Modemton eine Weiche vorzusehen, die nach einem Erkennen des Modemtons während des Verbindungsaufbaus die Verbindung an die Postmelde-Einheit umsteuert. Hierbei können beispielsweise die bekannten Fax-Modem-Weichen zum Einsatz kommen oder spezielle Weichen konzipiert werden.

Nach einer weiteren vorteilhaften Ausgestaltung des erfindungsgemäßen Verfahrens wird die Postmelde-Einheit über das für den Empfang und das Senden von elektronischer Post befähigte Kommunikationsendgerät an das Kommunikationsnetz angeschlossen, wobei mit Hilfe von im Kommunikationsendgerät angeordneten Schaltmitteln bei inaktivem Kommunikationsendgerät die Postmelde-Einheit an das Kommunikationsnetz und bei aktivem Kommunikationsendgerät dieses an das Kommunikationsnetz (KN) geschaltet ist. Diese Variante stellt eine besonders vorteilhafte Variante dar, da der Anschluß des für den Empfang und das Senden von elektronischer Post befähigte Kommunikationsendgerätes, d.h. insbesondere ein Personal Computer, an das Kommunikationsnetz - beispielsweise ein analoges Fernsprechnetz oder ein ISDN-Kommunikationsnetz - nicht geändert werden muß. Hierbei kann die bei analogen Fernsprechnetzen verwendete Weiche zum Anschluß und zur Verbindungsteuerung eines Fernsprechendgerätes und eines Personal Computers unverändert weiterbenutzt werden.

Weitere vorteilhafte Ausgestaltungen einer Postmelde-Einheit und eines Post-Servers zur Realisierung des erfindungsgemäßen Verfahrens sind den weiteren Ansprüchen zu entnehmen. Bei der Postmelde-Einheit stellt eine wesentliche Maßnahme die ständige Versorgung mit elektrischer Energie dar, damit ein ständiger Empfang von Nachrichten, die eine nicht abgerufene, elektronische Post anzeigen, möglich ist - Anspruch 16. Für die ständige Bereitschaft der Postmelde-Einheit ist jedoch wesentlich weniger Energie als für die Versorgung des für den Empfang und das Senden von elektronischer Post befähigte Kommunikationsendgerätes erforderlich. Die nicht abgerufene elektronischen Post wird in der Postmelde-Einheit vorteilhaft durch eine LED-Anzeige oder durch eine alphanumerische Anzeigeeinheit angezeigt - Anspruch 17 - realisiert, wobei bei einer Benutzung einer alphanumerischen Anzeigeeinheit der Komfort hinsichtlich der Anzeige der Postadresse oder Namen des Absenders und der Namen von Empfängern erheblich erhöht wird.

Die erfindungsgemäßen Post-Server stellen die üblicherweise bereits im Bereich der elektronischen Post empfangenden Kommunikationsendgeräte bzw. Teilnehmer angeordneten Post-Server bzw. E-Mail-Server dar, die lediglich um die erfindungsgemäßen Funktionen ergänzt werden. Die Ergänzung stellt im wesentlichen eine programmtechnische Ergänzung dar und ist mit geringem wirtschaftlichen Aufwand in die vorhandenen E-Mail-Server zu implementieren.

Im folgenden wird das erfindungsgemäße Verfahren sowie die erfindungsgemäße Postmelde-Einheit und der Post-Server anhand eines Blockschaltbildes näher erläutert.

Das Blockschaltbild zeigt ein Kommunikationsnetz KN, insbesondere ein Fernsprech- bzw. ISDN-Netz, an das zur Erläuterung des erfindungsgemäßen Verfahrens ein Kommunikationssystem KS, ein E-Mail-Server SERV und Kommunikationsendgeräte KE.. angeschlossen sind. Der E-Mail-Server SERV ist desweiteren mit dem Kommunikationssystem KS verbunden, an das Kommunikationsendgeräte KE, insbesondere Fernsprechgeräte oder Personal Computer, angeschlossen sind - im Blockschaltbild ist ein Kommunikationsendgerät KE beispielhaft dargestellt. Beim Ausführungsbeispiel sind Kommunikationsendgeräte KE durch ein Fernsprechendgerät Fe und einen Personal Computer PC realisiert, in dem E-Mails bzw. elektronische Post em empfangen und gesendet sowie gebildet werden kann - die Funktion ist im Blockschaltbild durch ein mit E-Mail bezeichnetes Rechteck angedeutet. Der Anschluß der Kommunikationsendgeräte KE erfolgt über die bekannten Telefonanschlußeinrichtungen bzw. TAE-Buchsen- und Stecker TAE - alternativ beispielsweise bei ISDN-Kommunikationsendgeräten zusätzlich über ISDN-Netzabschlußeinrichtungen - durch ein mit NT bezeichnetes, strichliertes Rechteck angedeutet -, wobei bei einem analogen Fernsprechanschluß zwischen der TAE-Buchse und den Kommunikationsendgeräten KE(PC,Fe) eine Weiche W - im Blockschaltbild durch ein strichliertes Rechteck mit der Bezeichnung W angedeutet - eingefügt ist. An die TAE-Buchse TAE - bei ISDN-Anschluß - bzw.an die Weiche W - bei analogem Anschluß - ist über den Personal Computer PC zusätzlich die erfindungsgemäße Postmelde-Einheit PME angeschlossen. Im Personal Computer PC ist ein Umschalter UM vorgesehen, dessen Mittenkontakt mit der Weiche W und dessen Umschaltkontakte mit den internen Komponenten des Personal Computers PC und mit der PostmeldeEinheit PME verbunden sind. Der Umschalter UM wird vom Personal Computer PC derart gesteuert, daß bei aktivem Personal Computer PC eine Verbindung zur Weiche W geschaltet und bei inaktivem Personal Computer PC - d.h. stromlosen Zustand - eine Verbindung von der Weiche W zur Postmelde-Einheit PME geschaltet ist.

Beim Ausführungsbeispiel sei angenommen, daß vom mit A bezeichneten, an das Kommunikationsnetz KN angeschlossenen Kommunikationsendgerät KE(A) ein E-Mail bzw. eine elekronische Post em an das mit B bezeichnete, an das Kommunikationssystem KS angeschlossene Kommunikationsendgerät KE(B) übermitteln will. Hierzu wird durch das A-Kommunikationsendgerät KE(A) ein Verbindungsaufbau über das Kommunikationsnetz KN zu dem E-Mail-Server SERV aufgebaut, der demjenigen Kommunikationssystem KS zugeordnet ist, an das das B-Kommunikationsendgerät KE(B) angeschlossen ist. Im Rahmen des Verbindugsaufbaus wird die elektronische Post em, d.h. ein E-Mail-spezifischer Kopfteil einschließlich einer beispielsweise einen Brief enthaltende Datei, vom A-Kommunikationsendgerät KE(A) über das Kommunikationsnetz KN an den E-Mail-Server SERV übermittelt und in diesem in einem Speicher SP gespeichert, wobei eine elektronische Post em mit oder ohne angehängte Dateien stets eine Einheit bilden. Ist das Kommunikationsendgerät bzw. die E-Mail-Funktion E-Mail aktiviert, so wird an dessen Anzeigeeinheit - beispielsweise eine nicht dargestellte Bildschirmeinrichtung - das Vorliegen einer für den zugeordneten Teilnehmer TLN B vorgesehenen elekronischen Post em angezeigt. Die elektronische Post em kann anschließend vom E-Meil-Server SERV abgerufen, d.h. vom E-Mail-Server SERV zu dem betreffenden Kommunikationsendgerät KE übertragen werden. Ist das Kommunikationsendgerät jedoch deaktiviert, d.h. in stromlosem Zustand insbesondere über einen längeren Zeitraum, kann der Teilnehmer nicht informiert werden und die im E-Mail-Server SERV gespeicherte elektronische Post em kommt eventuell zu spät, d.h. verliert beispielsweise ihre Bedeutung bzw. Aktualität - beispielsweise eine kurzfristige Terminabsprache.

Zur Vermeidung dieser Verzögerung bzw. dieses Aktualitätsverlustes ist das erfindungsgemäße Verfahren einschließlich der erfindungsgemäßen Postmelde-Einheit PME vorgesehen. In die Postmelde-Einheit PME ist eine programmtechnisch realisierte Melderoutine MR implementiert, mit deren Hilfe nach der Übermittlung der elekronischen Post em vom A-Kommunikationsendgerät KE(A) in den Speicher SP eine Nachricht n gebildet und über das Kommunikationssystem KS an die ständig in Bereitschaft befindliche Postmelde-Einheit PME übertragen wird. In der Postmelde-Einheit PME ist zum Empfang dieser Nachrichten n eine Übertragungseinrichtung MODEM angeordnet, von der die Nachricht n über eine Steuereinrichtung ST an eine Anzeigeeinheit ANZ weitergeleitet wird.

Im einfachsten Fall ist die Nachricht n durch einen Meldeton met mit einer vorgegebenen Frequenz - beispielsweise 1200 Hz - repräsentiert. Um diesen Meldetom met über ein analoges Fernsprech-Kommunikationsnetz KN gezielt an die jeweilige Postmelde-Einheit PME zu übermitteln, muß eine Verbindung über die Weiche W zur Postmelde-Einheit PME hergestellt werden. Dies wird dadurch bewirkt, daß vor dem Übermitteln des Meldetons met ein Modemton mot vom E-Mail-Server Serv an die betreffende TAE-Buchse TAE bzw. Weiche W übertragen wird. In der Weiche W wird der Modemton mot erkannt und die ankommende Verbindung über den Umschalter UM im Personal Computer PC zur Postmelde-Einheit PME gesteuert. In dieser wird der daraufhin übermittelte Meldeton met erkannt und optisch angezeigt - am einfachsten durch eine LED-Anzeige. Durch das Leuchten der LED wird dem Teilnehmer das Vorliegen einer elektronischen Post em angezeigt, wodurch dieser veranlaßt wird, das Kommunikationsendgerät KE zu aktivierten, d.h. mit Energie zu versorgen, und die elektronische Post em abzurufen. Die Realisierung dieser Variante ist durch bereits verfügbare Weichen W und einfach konzipierte frequenzselektive Empfangseinheiten - nicht dargestellt - mit geringstem wirtschaftlichem Aufwand möglich.

Die Übermittlung eines Meldetones met ist auch über ein ISDN-Kommunikationsnetz KN möglich, wobei die Postmeldeeinheit PME direkt durch die für den Personal Computer PC vorgesehene Rufnummer rn über den Umschalter UM im Personal Computer PC angesteuert werden kann - d.h. eine Weiche W ist nicht erforderlich. In der Postmelde-Einheit PME ist jedoch für den Verbindungsaufbau eine Realisierung einer ISDN-Schnittstelle - üblicherweise eine S0-Schnittstelle - einschließlich einer Steuerung ST für die Steuerung des Verbindugsaufbaus - insbesondere D-Kanal-Protokoll - vorzusehen. Nach einem Verbindungsaufbau kann der Meldeton met über einen Nachrichtenkanal - d.h. B-Kanal - übertragen und in der Steuereinheit ST erkannt und das Erkennen an einer optischen Anzeige ANZ, beispielsweise wiederum eine LED-Anzeige LED, optisch angezeigt werden.

Die Nachricht n kann gemäß weiteren Alternativen der Erfindung im Sinne einer Daten enthaltenden Meldung konzipiert sein und je nach Realisierung weitere, unterschiedliche Informationen enthalten. Für den Empfang einer derartig ausgestalteten Nachricht n ist in der Postmelde-Einheit PME bei einem Fernsprech-Kommunikationsnetz KN eine als Modem bekannte Übertragungseinrichtung MODEM und bei einem ISDN-Kommunikationsnetz KN eine als ISDN-Schnittstelle - insbesondere S0-Schnittstelle - ausgestaltete Übertragungseinrichtung MODEM vorzusehen. Die Übertragungseinrichtungen - nicht dargestellt - des Kommunikationsendgerätes KE bzw. des Personal Computers können alternativ auch mitbenutzt werden - beispielsweise die ISDN- oder Modem-Anschlußkarte im Personal Computer PC -, jedoch sind diese ständig mit Energie zu versorgen und mit der Steuereinheit ST der Postmelde-Einheit PME zu verbinden. Diese Variante ist insbesondere bei einer Integration der Postmelde-Einheit PME in das Kommunikationsendgerät KE vorteilhaft.

Im einfachsten Fall ist eine als Meldung ausgestaltete Nachricht n sich selbst erklärend, d.h. es ist keine zusätzliche Information enthalten und zeigt an, daß für das B-Kommunikationsendgerät KE(B) im E-Mail-Server SERV eine elektronische Post em gespeichert und nicht abgerufen ist. Nach dieser Interpretation in der Steuereinheit ST wird durch diese wiederum eine einfache, beispielsweise als LED realiserte Anzeigeeinheit ANZ aktiviert, d.h. die LED leuchtet. Durch das Leuchten der Anzeigeeinheit ANZ wird einem im Bereich des B-Kommunikationsendgerätes KE(B) befindlichen Teilnehmer TLNB bzw. einer Person optisch mitgeteilt, daß für ihn eine elektronische Post em vorliegt bzw. im E-Mail-Server SERV gespeichert ist. Diese Anzeige des Vorliegens einer elektronischen Post em kann auch beispielsweise durch eine Ruffolge akustisch erfolgen - nicht dargestellt.

Nach einer Ausgestaltung der Erfindung kann in der Nachricht n zusätzlich eine Zeitinformation zi enthalten sein, die den Zeitpunkt der Übermittlung oder Einspeicherung der elektronischen Post em angibt. Desweiteren kann eine Information über das rufende Kommunikationsendgerät KE(A) enthalten sein. Hierzu wird im E-Mail-Server SERV beim Verbindungsaufbau die Rufnummer des rufenden Kommunikationsendgerätes KE, d.h. des A-Kommunikationsendgerätes KE(A) ermittelt und ggfs. mit einer Zeitinformation zi in die Nachricht n eingefügt. Desweiteren kann auch die elektronische Post em selbst dahingehend bewertet werden, von welchem Teilnehmer TLNA die elektronische Post em gesendet wird oder an welchen Teilnehmer TLNB die elektronische Post em zu übermitteln ist. Hierzu sind vorteilhaft in der elektronischen Post em bestimmte Felder für die Einfügung der Namen na der eine elektronische Post em sendenden und empfangenden Teilnehmer TLNA..,TLNB.. vorzusehen. Nach der Bewertung der elektronischen Post em im E-Mail-Server SERV wird beispielsweise neben der Zeitinformation zi der Name na des die elektronische Post em sendenden Teilnehmers TLN B oder dessen Rufnummer rn ermittelt, in die Nachricht n eingefügt und an die Postmelde-Einheit PME übermittelt. In dieser wird der Name na des Teilnehmers TLN B oder die Rufnummer rn aus der Nachricht n entnommen und an die Anzeigeeinheit ANZ übertragen, die in diesem Fall als alphanumerische Einheit, beispielsweise eine LCD-Anzeigeeinheit ausgestaltet ist. Zusätzlich kann der Name na des Teilnehmers TLN B eingefügt werden, an den die elektronische Post em gerichtet ist. Dieser Name na wird ebenfalls in der Anzeigeeinheit ANZ der Postmelde-Einheit PME optisch angezeigt. Die Anzeige von Namen na von eine elektronische Post em empfangenden Teilnehmern TLN B.. kann auch durch mehrere einzelne Anzeigen, beispielsweise LED-Dioden optisch oder mehrere unterschiedliche Ruftöne akustisch erfolgen.

Durch die erfindungsgemäße optische oder akustische Anzeige über das Vorliegen einer gespeicherten elektronischen Post em in der Postmelde-Einheit PME kann ein Teilnehmer TLN B, für den die elektronische Post em bestimmt ist, umgehend die im E-Mail-Server SERV gespeicherte elektronische Post em abrufen, wobei hierzu das betreffende Kommunikationsendgerät KE bzw. der Personal Computer PC aktivert wird bzw. mit Energie versorgt wird. Somit bleibt die Aktualität der elektronischen Post em erhalten. Ist das betreffende Kommunikationsendgerät KE(B) über eine Datenschnittstelle V.24 mit der Postmelde-Einheit PME verbunden, können die in der Nachricht n enthaltenen Informationen zi, rn, na (TLN A,TLN B..) über diese Verbindung von der Postmelde-Einheit PME vor einem Abrufen der elektronischen Post em an das Kommunikationsendgerät KE(B) übertragen und angezeigt werden. Hierdurch ist eine Aktualitätskontrolle möglich - beispielsweise durch die übermittelte Zeitinformation zi, durch die der Einspeicherungszeitpunkt der elektronischen Post em in den Speicher SP oder der Übermittlungszeitpunkt der elektronischen Post em an den E-Mail-Server SERV angezeigt wird. Die Datenschnittstelle V.24 ist vorzugsweise durch die üblicherweise verwendete V.24-Schnittstelle realisiert.

Die Postmelde-Einheit PME kann alternativ in das Kommunikationsendgerät KE bzw. in den Personal Computer PC integriert werden, wobei besonders vorteilhaft die vorhandene Übertragungseinheit MODEM - sowohl beim Fernsprech-Kommunikationsnetz KN als auch beim ISDN-Kommunikationsnetz KN - für die Signalisierung und die Übermittlung von Daten - beispielsweise Daten, die über das Internet übermittelt werden - mitbenutzt werden kann - im Blockschaltbild durch ein strichliertes, im Kommunikationsendgerät KE angeordnetes Rechteck mit der Bezeichnung MODEM angedeutet. Hierbei ist lediglich die Übertragungseinheit MODEM ständig mit Energie zu versorgen. Dies ist vorteilhaft, da bei inaktivem Kommunikationsendgerät KE die Übertragungseinheit MODEM nicht benutzt wird. Die UmSteuerung der Übertragungseinheit MODEM im Kommunikationsendgerät KE erfolgt bei dieser Variante beim Aktivieren und Deaktivieren, d.h. beim Ein- und Ausschalten der Stromversorgung des Kommunikationsendgerätes KE, wobei die Übertragungseinheit MODEM jedoch ständig mit Energie zu versorgen ist. Prinzipiell kann auch ein für eine Faksimile-Übertragung im Kommunikationsendgerät KE vorgesehene Übertragungseinheit - nicht dargestellt - mitbenutzt werden, wobei die zu übermittelnde Nachricht n im Faksimile-Format zu bilden und zu übertragen ist.

Die Postmelde-Einheit PME kann auch über einfachere Weichen W ohne Modemtonerkennung angeschlossen werden - nicht dargestellt -, bei der nach einer vorgegebenen Anzahl von Anrufsignalen automatisch der Anruf auf den Personal Computer PC und, sofern dieser inaktiv geschaltet ist, über diesen an die Postmelde-Einheit PME gesteuert wird.

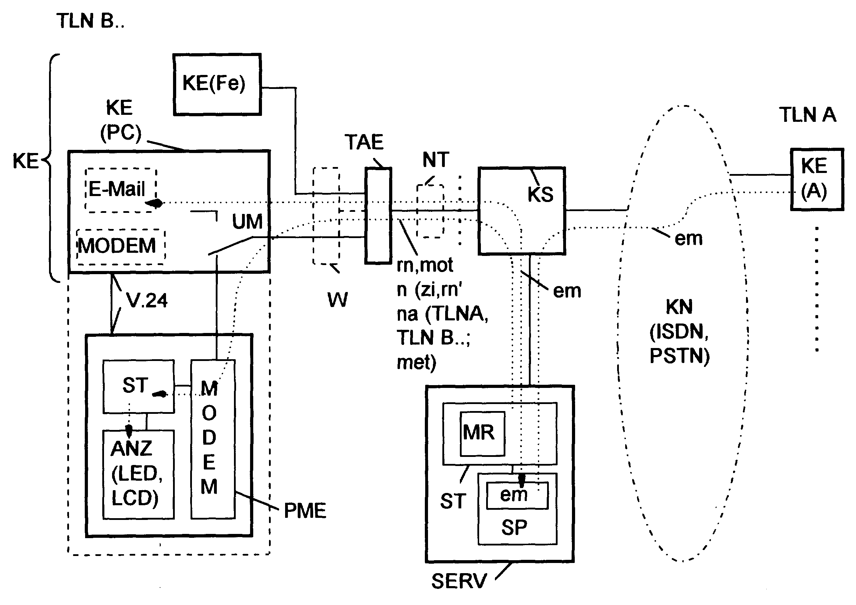

## Patentansprüche

1. Verfahren zum Behandeln von nicht abgerufener, elektronischer Post (em) in einem für die Übermittlung und Speicherung von elektronischer Post (em) befähigten Kommunikationsnetz (KN), an das für den Empfang und das Senden von elektronischer Post (em) befähigte Kommunikationsendgeräte (KE(PC)) angeschlossen sind,
- bei dem im Kommunikationsnetz (KN) eine das Vorliegen zumindest einer nicht abgerufenen elektronischen Post (em) anzeigende Nachricht (n) gebildet und
- an eine im Bereich des betroffenen Kommunikationsendgerätes KE(B) angeordnete, mit dem Kommunikationsnetz (KN) verbundene sowie ständig für den Empfang von Nachrichten befähigte Postmelde-Einheit (PME) übermittelt wird, und
- bei dem das Vorliegen einer nicht abgerufenen, elektronischen Post für das jeweilige Kommunikationsendgerät (KE(B)) an der Postmelde-Einheit (PME) optisch und/oder aktustisch angezeigt wird.

2. Verfahren nach Anspruch 1,
**dadurch gekennzeichnet**,
daß für die Übermittlung der Nachricht (n) eine Wählverbindung vom Kommunikationsnetz (KN) zur Postmelde-Einheit(PME) aufgebaut und anschließend abgebaut wird.

3. Verfahren nach Anspruch 1 oder 2,
**dadurch gekennzeichnet**,
daß in der Nachricht (n) der Name und/oder die elekronische Postadresse (rn) des Absenders (TLN A) angegeben ist.

4. Verfahren nach einem der Ansprüche 1 bis 3,
**dadurch gekennzeichnet**,
daß in der Nachricht (n) der Name (na) des Empfängers (TLN B) angegeben ist.

5. Verfahren nach Anspruch 3 oder 4,
**dadurch gekennzeichnet**,
daß die in der Nachricht (n) angegebene Postadresse (rn) des Absenders (TLN A) sowie der Name (na) des Empfängers (TLN B) in der Postmelde-Einheit (PME) gepeichert werden, und daß die gespeicherte Postadresse (rn) des Absenders (TLN A) sowie der Name (na) des Empfängers (TLN B) über eine Verbindung mit dem jeweiligen Kommunikationsendgerät (KE(B)) von diesem gelesen werden und in diesem visualisierbar sind.

6. Verfahren nach einem der vorhergehenden Ansprüche,
**dadurch gekennzeichnet**,
daß bei einer gebührenpflichtigen Nachricht (n) die Übernahme der Gebühren durch den Empfänger (TLN B) oder dem Absender (TLN A) einer elektronischen Post (em) dem Kommunikationsnetz (KN) durch den Empfänger (TLN B) oder den Absender (TLN A) mitgeteilt wird.

7. Verfahren nach einem der vorhergehenden Ansprüche,
**dadurch gekennzeichnet**,
daß in die Nachricht (n) ein den Zeitpunkt der Übermittlung oder Speicherung der elektronischen Post (em) im Kommunikationsnetz (KN) anzeigende Zeitinformation (zi) eingefügt ist und diese in der Postmelde-Einheit (PME) optisch angezeigbar ist.

8. Verfahren nach einem der vorhergehenden Ansprüche,
**dadurch gekennzeichnet**,
daß die Nachricht (n) durch einen Meldeton (met) mit einem vorgegebenen Frequenzbereich repräsentiert ist.

9. Verfahren nach einem der vorhergehenden Ansprüche,
**dadurch gekennzeichnet**,
daß der gezielte Verbindungsaufbau zur jeweiligen Postmelde-Einheit (PME)
- beim analogen Fernsprech-Kommunikationsnetz (KN) mit Hilfe einer Rufnummer (rn) und eines Modemtons (mot) mit einem vorgegebenen Frequenzbereich und
- beim ISDN-Kommunikationsnetz (KN) mit Hilfe einer hierfür definierten ISDN-Rufnummer (rn)
durchgeführt wird.

10. Verfahren nach einem der vorhergehenden Ansprüche,
**dadurch gekennzeichnet**,
daß die Postmelde-Einheit (PME) über das für den Empfang und das Senden von elektronischer Post (em) befähigte Kommunikationsendgeräte (KE(PC)) an das Kommunikationsnetz (KN) angeschlossen ist, wobei mit Hilfe von im Kommunikationsendgerät (KE(PC)) angeordneten Schaltmitteln (UM)
- bei inaktivem Kommunikationsendgerät (KE(PC)) die Postmelde-Einheit (PME) an das Kommunikationsnetz (KN) und
- bei aktivem Kommunikationsendgerät (KE(PC)) dieses an das Kommunikationsnetz (KN) geschaltet ist.

11. Postmelde-Einheit für den ständigen Empfang von zumindest einer eine nicht abgerufene elektronische Post (E-Mail) anzeigende Nachricht,
- mit einem Anschluß zum Verbinden mit einem für die Übermittlung und Speicherung von elektronischer Post (em) befähigten Kommunikationsnetz (KN),
- mit Mitteln zum Empfang von nicht abgerufener elektronischer Post (em) anzeigenden Nachrichten (n),
- mit Anzeigemitteln (ANZ,LED,LCD) zur optischen und/oder akustischen Anzeige einer nicht abgerufenen elektronischen Post (em) für das jeweilige Kommunikationsendgerät.

12. Postmelde-Einheit nach Anspruch 11,
**dadurch gekennzeichnet**,
daß Anzeigemittel (ANZ) zur optischen und/oder akustischen Anzeige einer in der Nachricht (n) angegebenen Postadresse (rn ) des Absenders (TLNA) sowie zumindest eines Namens (na) des Empfängers (TLNB..) vorgesehen sind.

13. Postmelde-Einheit nach Anspruch 11 oder 12,
**dadurch gekennzeichnet**,
daß prozessorgesteuerte Mittel (ST) zur Bewertung der übermittelten Nachricht (n) vorgesehen sind.

14. Postmelde-Einheit nach einem der Ansprüche 11 bis 13,
**dadurch gekennzeichnet**,
daß für den Empfang der Nachrichten (n) eine kommunikationsnetz-spezifische Empfangseinrichtung (MODEM) zum physikalischen und prozeduralen Anschluß an ein analoges oder ISDN-orientiertes Kommunikationsnetz (KN) vorgesehen ist.

15. Postmelde-Einheit nach einem der Ansprüche 11 bis 14,
**dadurch gekennzeichnet**,
daß die Postmelde-Einheit (PME) als eigenständige Einheit oder als in das Kommunikationsendgerät (KE(PC)) integrierbare Einheit realisiert ist, und daß bei einer integrierten Einheit die vorhandene Empfangseinrichtung (MODEM) benutzt wird und die Anzeigemittel (ANZ) am Kommunikationsendgerät (KE(PC)) angebracht sind.

16. Postmelde-Einheit nach Anspruch 15,
**dadurch gekennzeichnet**,
daß bei einer integrierten Postmelde-Einheit (PME) die mitbenutzte Empfangseinrichtung (MODEM) und die weiteren Komponenten der Postmelde-Einheit (PME) derart mit Energie versorgt wird, daß ein ständiger Empfang von Nachrichten (n) möglich ist.

17. Postmelde-Einheit nach einem der Ansprüche 11 bis 16,
**dadurch gekennzeichnet**,
daß eine nicht abgerufene elektronische Post (em)
- durch eine optische Einzelanzeige (LED) oder
- durch eine optische, alpha-numerische Anzeigeeinheit (LCD) und/oder
- durch eine einzelne akustische Einheit angezeigt wird.

18. Postmelde-Einheit nach einem der Ansprüche 11 bis 17,
**dadurch gekennzeichnet**,
daß bei einem Anschluß an ein analoges Kommunikationsnetz (KN) der Postmelde-Einheit (PME) eine Weiche (W) zum Erkennen eines vom Post-Server (SERV) beim Verbindungsauf übermittelten Modemtons (mot) und zum Umsteuern der Verbindung zur Postmelde-Einheit (PME) zugeordnet ist, wobei bei Vorhandensein einer Weiche (W) für das Kommunikationsendgerät (KE(PC)) diese benutzt und ein Anruf über das inaktive Kommunikationsendgerät (KE(PC) an die Postmelde-Einheit (PME) gesteuert wird.

19. Postmelde-Einheit nach einem der Ansprüche 11 bis 18,
**dadurch gekennzeichnet**,
daß für den Empfang und das Erkennen von durch einen Meldeton (met) mit einem vorgegebenen Frequenzbereich repräsentierten Nachrichten (n) eine frequenzselektive Empfangseinrichtung angeordnet ist.

20. Postmelde-Einheit nach einem der Ansprüche 11 bis 19,
**dadurch gekennzeichnet**,
daß für den Empfang und das Erkennen von durch Meldungen mit repräsentierten Nachrichten (n) eine Steuereinheit (ST) angeordnet ist.

21. Post-Server (SERV) in einem zur Übermittlung und Speicherung von elektronischer Post (em) befähigten Kommunikationsnetz (KN),
- mit Speichermitteln (SP) zur Zwischenspeicherung von nicht abgerufener elektronischer Post (em),
- mit Mitteln (MR) zum Bilden von Nachrichten (n) für die jeweiligen Kommunikationsendgeräte (KE) im Falle der Speicherung einer elekronischen Post (em) an das jeweilige Kommunikationsendgerät (KE), und
- mit Mitteln zum Übermitteln der gebildeten Nachricht (n) an die betroffene Postmelde-Einheit (PME).

22. Post-Server nach Anspruch 21,
**dadurch gekennzeichnet**,
daß die Mittel zum Übermitteln von gebildeten Nachrichten (n) durch Mittel zum Auf- und Abbau von Wählverbindungen (VA) zu der betroffenen Postmelde-Einheit (PME) vorgesehen sind.

23. Post-Server nach Anspruch 21 oder 22,
**dadurch gekennzeichnet**,
daß Mittel zum Ermitteln der Namen (na) und/oder Postadresse (rn) der Absender (TLNA) sowie der Namen (na) des zumindest einen Empfängers (TLNB..) aus der empfangenen elektronischen Post (em) vorgesehen sind.
